Europäisches Patentamt

European Patent Office

Office européen des brevets

(11) Publication number: **0 268 422 B1**

## (12) EUROPEAN PATENT SPECIFICATION

(45) Date of publication of patent specification: **17.06.92**

(51) Int. Cl.[5]: **B32B 27/08**, B32B 7/02

(21) Application number: **87309988.1**

(22) Date of filing: **12.11.87**

(54) **Stretch-wrap plastics film.**

(30) Priority: **17.11.86 US 931315**

(43) Date of publication of application:
**25.05.88 Bulletin 88/21**

(45) Publication of the grant of the patent:
**17.06.92 Bulletin 92/25**

(84) Designated Contracting States:
**AT BE CH DE ES FR GB GR IT LI LU NL SE**

(56) References cited:
**EP-A- 0 080 198     EP-A- 0 095 299
EP-A- 0 124 931     GB-A- 2 029 762
US-A- 4 118 438     US-A- 4 518 654**

(73) Proprietor: **MOBIL OIL CORPORATION
150 East 42nd Street
New York New York 10017(US)**

(72) Inventor: **Dobreski, David Vincent
99 Coutry Downs Circle
Fairport New York 14450(US)**
Inventor: **Metz, Robert John
475 Brooke Avenue
Rochester New York 14615(US)**
Inventor: **Morris, James Dennis
79 Rue Der Dippach
L-8055 Bertrange(LU)**

(74) Representative: **Colmer, Stephen Gary
Patent Department c/o Mobil Services Company Limited Mobil Court 3 Clements Inn
London WC2A 2EB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to stretch-wrap plastics film. More particularly, this invention relates to thermoplastic polymeric stretch wrap film suitable for applications where the film is required to have one surface with a high degree of cling and the other surface with no cling to itself and an ability to slide when in contact with a like surface in relative motion.

The use of thermoplastic polymeric stretch wrap film for the overwrap packaging of goods, in particular pallet loads, is a commercially developing end use.

It is known to include additives to impart an increased cling force between two contacting stretch-wrap film surfaces. Examples of such cling additives are disclosed in U.S. Patent 4,518,654. The incorporation of such additives in stretch-wrap film employed, for example, for packaging pallet loads presents a serious and expensive problem. While the employment of such an additive will enhance and strengthen the bond of the film after the load has been stabilized, there is a tendency for one stabilized load to cling to an adjacent load causing transportation and handling problems; and also for one load to pull destructively upon an adjacent load.

The present invention seeks to provide another, more specific way in which to overcome the problem in an effective and economical manner.

In accordance with the present invention, there is provided a thermoplastic polymeric stretch-wrap film having a surface A which can adhere, in its stretched condition, to the other surface B, which surface B is self-slidable and non-self-adherent and comprises, over at least a part of its area, a thermoplastic organic polymer comprising a polyamide or a polyfluoroolefin in an amount different from the film polymer adjacent surface B and/effective to provide the self-slidable and non-self-adherent property of the surface.

Desirably, a stretch-wrap film has a minimum stretch capability of 50% and a maximum stretch capability of 750%; more preferably, the film has a minimum stretch capability of 50% and typically has a maximum stretch of 300 to 400%. (That is, any film which, under the stretching conditions can sustain a deformation ratio from 1.5 to 8.5.) Any film satisfying these criteria is contemplated for use herein.

The organic polymer effective to provide the self-slidable and non-self-adherent property of surface B may suitably be interblended into the thermoplastic film polymer adjacent surface B. The organic polymer should have comparatively low surface-free energy so that it will enable such surfaces, when in contact with a like surface in relative motion not to cling destructively together. Alternatively, the entire surface B may consist of this polymer, overlying a layer of any different thermoplastic polymer. Examples of organic polymers having comparatively low surface-free energies are polyamides; for example, polycapramide, (nylon 6), polyhexamethylene adipamide, (nylon 6,6) and polyhexamethylene sebacamide, (nylon 6,10); and polyfluoroolefins; for example, polytetrafluoroethylene and polyvinylidene fluoride. The amount of organic, preferably organic thermoplastic, polymer present in surface B is any amount which will provide slip between moving B surfaces. This amount can be from 0.1% to 100% of the B layer.

The film polymer adjacent surface A comprises a thermoplastic polymer which, in film form, need not possess a substantial cling force to a like layer. When this is the case, the film polymer is modified with an additive, present in association with the film polymer at least in surface A in an amount sufficient to maintain film A, at least in its stretched condition, in cling contact with surface B.

Preferred thermoplastic film polymers suitable for use in the present invention adjacent surface A or adjacent surface B are polyolefins such as polyethylene, polypropylene, copolymers of ethylene or propylene with each other or with a minor amount of at least one other mono-olefinically unsaturated monomer such as butene-1, isobutylene, an alkenoic acid such as acrylic acid, an ester of an alkenoic acid such as an acrylate ester, vinyl acetate and styrene. The preferred material is polyethylene, including high and low molecular weight polyethylene and copolymers thereof.

Particularly preferred for the film polymer adjacent surface A is linear low density polyethylene (LLDPE). This material is a copolymer of ethylene with a $C_4$-$C_{10}$ olefin, for example, butene-1; 1,3-methyl-butene-1; 1,3-methyl-pentene-1; hexene-1; 4-methyl-pentene-1; 3-methyl-hexene-1; octene-1; decene-1. The alpha-olefin is usually present in from 1-15 in weight percent of the copolymer. A typical manufacturing process for the formation thereof is disclosed in U.S. Patents 4,076,698 and 4,205,021. The preferred LLDPE (which can be very low density polyethylene) has a density ranging from 0.890 to 0.940 g/cc. This material preferably has a melt index of from 0.4 to 10.

Preferred for the thermoplastic film polymer adjacent surface B is the above-identified LLDPE. In addition, the film polymer adjacent surface B layer can be fabricated from a low density polyethylene (LDPE). This material will have a density ranging from 0.890 to 0.940 g/cc, and have a melt index from 0.4 to 10.

The cling side of the A/B film may contain any cling agent in or on the film polymer adjacent surface A which will be effective in maintaining the A film in cling contact with surface B while both are in the stretched condition. Examples of such cling additives include polyisobutylene, especially having a number average molecular weight from 1000 to 3000 as measured by vapor phase osmometry; amorphous, atactic, polypropylene, especially having a number average molecular weight of 2000; polyterpenes; mono-and di-glycerides of fatty acids and mixtures thereof, see U.S. 3,048,263; amines and amides containing at least one ethylene oxide group, see U.S. 3,084,265 and 3,084,266.

The cling additive can be present in any concentration which will permit surface A to cling to surface B, or other surfaces, while in its stretched condition. A preferred concentration is from 0.1 to 10% by weight of the A layer.

It is to be understoof that since the subject film must be a stretch film which has a cling aspect on one surface of the film and a no cling-slip aspect on the other surface of the film this can be accomplished either by coextrusion or by laminating two or more layers together. As long as the resulting film is a stretch wrap film having a cling and no cling-slip surfaces it is immaterial as to the number of film layers in between these two different types of surfaces. Indeed, in forming the stretch-wrap film of the invention, a convenient process is by coextruding the layers comprising surface A and surface B (the A and B layers respectively). The A layer is preferably between 10% and 99.5% of the overall film thickness, and the B layer is preferably between 90 and 0.5% of the overall film thickness.

In preparing the cling and noncling layers (the A and B layers, respectively), it is contemplated to include therebetween any intermediate layer sufficient to prevent additive migration in either direction. For example, such a layer can be a layer of A without a cling additive or a layer of B without its anti-cling polymer material or any other barrier type thermoplastic resin. Further, the invention contemplates a multilayer film, with layers of other formulations between layers A and B.

In preparing the A/B extrudate of the present invention, any known coextrusion technique may be employed. For example, the A formulation containing, if required, an appropriate amount of cling additive can be fed into the feed hopper of a conventional rotating screw extruder. The extruder screw employed can have a 6-inch (15cm) diameter and a length to diameter ratio of about 24:1. A satellite extruder can be employed for the coextrusion of the B formulation containing the appropriate amount of the anti-cling/slip organic polymer. The satellite extruder can comprise a conventional extruder having an extruder screw with a 3.5 inch (9cm) diameter and a length to diameter ratio of about 24:1. Molten resin from the satellite extruder is fed into the cast film die affixed to the end of the A extruder through an adaptor specifically designed to join the B polymer stream from the satellite extruder to the molten A polymer stream so that it effectively interfaces with the molten surface of the A polymer. A more complete description of this prior art process may be found in U.S. 3,748,962.

While not intended to be bound by any theory of operation, it is believed that during the coextrusion of the A and B layers, a sufficient surface area of the anti-cling/slip polymer is presented at the surface of B such that during its stretched condition the effective surface free energy of B is reduced so that B surfaces cannot destructively interact when brought together under dynamic conditions.

The following Examples illustrate the invention.

## EXAMPLE 1

Employing the above-described technique, an A/B coextrusion was formed composed of a 75% A layer thickness of a 3.0 MI, 0.917 g/cc density ethylene-hexene copolymer containing less than 10% by weight hexene (an LLDPE commercially available from Exxon Corporation identified as 3003.55) containing polyisobutylene (Amoco H 300) in the ratio of 2 parts per 98 parts of LLDPE; and a 25% B layer thickness of the same LLDPE containing nylon 6,6 (Celanese 1001). The nylon is present in a ratio of 15 parts to 85 parts of the LLDPE. The slot coextrudant film had a gauge of 0.9 mil (0.2mm) at melt temperatures of approximately 560°F (293°C) for the A layer and 580°F (304°C) for the B layer.

The surface of A had an excellent cling force to the surface of B while both were in the stretched condition, i.e. greater than 100% stretch. The dynamic coefficient of friction of the surfaces of B in relation to itself was excellent. There was no cling force and there was a slide property when the noncling surfaces were contacted with relative motion therebetween.

## EXAMPLE 2

The procedure and structure of Example 1 was repeated except that the B layer was decreased to 10% of the thickness of the film. The same excellent characteristics were obtained.

## Example 3

A third stretch wrap film was prepared using the procedure and formulation of Example 1 except that the nylon 6,6 was not included in the 25% thickness, B layer and the A layer contain 1 part polyisobutylene (PIB) to 99 parts LLDPE. While the surface of A had an effective cling to the surface of layer B under stretch wrap conditions, layer B could not be dynamically, i.e., slidingly, interfaced with a layer of itself without a destructive tearing result.

Although the Examples describe a cast film process for the manufacture of the present stretch film products, it will be understood that other conventional thermoplastic film forming techniques for the preparation of stretch wrap may be employed, such as, tubular extrusion utilizing an entrapped air bubble to expand the extruded film tube. The stretch wrap film of the present invention should have a minimum stretch capability of about 50% and typically will have a maximum stretch of about 300-400% under conditions employed for commercially wrapping pallets of loose loads.

## Claims

1. A thermoplastic polymeric stretch-wrap film having a surface A which can adhere, in its stretched condition, to the other surface B, which surface B is self-slidable and non-self-adherent and comprises, over at least a part of its area, a thermoplastic organic polymer different from the film polymer adjacent surface B and comprising a polyamide or a polyfluoroolefin in an amount effective to provide the self-slidable and non-self-adherent property of the surface.

2. A film according to claim 1 wherein the polyamide comprises nylon 6, nylon 6,6 of nylon 6,10.

3. A film according to claim 1 wherein the polyfluoroolefin comprises polytetrafluorethylene or polyvinylidene difluoride.

4. A film according to any preceding claim wherein the organic polymer comprises from 0.1% to 100% of the surface B.

5. A film of according to any preceding claim wherein the film polymer adjacent surface A comprises a polyolefin.

6. A film according to any preceding claim wherein the film polymer adjacent surface B comprises a polyolefin.

7. A film according to claim 5 or 6 wherein the polyolefin comprises polyethylene, polypropylene or a copolymer of ethylene or propylene with each other or with a minor amount of at least one other mono-olefinically unsaturated monomer.

8. A film according to claim 6 wherein the film polymer adjacent surface A comprises a linear low density polyethylene (LLDPE).

9. A film according to claim 6 or 7 wherein the film polymer adjacent to surface B comprises LDPE or LLDPE.

10. A film according to any preceding claim which comprises a plurality of layers of thermoplastic polymer.

11. A film according to claim 10 formed by coextrusion or lamination.

## Revendications

1. Un film d'emballage étirable formé d'un polymère thermoplastique présentant une face A qui peut adhérer, lorsqu'elle est à l'état étiré, à l'autre face B, laquelle face B peut glisser sur elle-même, est exempte de caractère autoadhésif et comprend sur au moins une partie de sa surface, un polymère organique thermoplastique différent de la face B adjacente polymère du film et qui comprend un polyamide ou une polyfluorooléfine en une quantité suffisante pour conférer à ladite face les propriétés nonadhésives et de glissement sur elle-même.

2. Un film selon la revendication 1, dans lequel le polyamide comprend nylon 6, nylon 6,6, ou nylon 6,10.

3. Un film selon la revendication 1, dans lequel la polyfluorooléfine comprend du polytétrafluoréthylène ou du difluorure de polyvinylidène.

4. Un film selon l'une quelconque des revendications précédentes, dans lequel le polymère organique représente 0,1% à 100% de la surface B.

5. Un film selon l'une quelconque des revendications précédentes, dans lequel la face A adjacente polymère du film comprend une polyoléfine.

6. Un film selon l'une quelconque des revendications précédentes, dans lequel la face B adjacente polymère du film comprend une polyoléfine.

7. Un film selon la revendication 5 ou 6, dans lequel la polyoléfine comprend polyéthylène, polypropylène ou copolymère d'éthylène ou propylène, entre eux, ou avec une quantité mineure d'au moins un autre monomère mono-oléfinique insaturé.

8. Un film selon la revendication 6, dans lequel la face A adjacente polymère du film comprend du polyéthylène linéaire basse densité (LLDPE).

9. Un film selon la revendication 6 ou 7, dans lequel la face B adjacente polymère du film comrpend du LDPE ou du LLDPE.

10. Un film selon l'une quelconque des revendications précédentes, qui comporte une pluralité de couches de polymère thermoplastique.

11. Un film selon la revendication 10, formé par coextrusion ou par laminage.

**Patentansprüche**

1. Thermoplastische polymere Streck-Umwickelfolie mit einer Oberfläche A, die in ihrem gestreckten Zustand an der anderen Oberfläche B haften kann, die selbstgleitend und nichtselbsthaftend ist und über wenigstens einen Teil ihrer Fläche ein thermoplastisches organisches Polymer enthält, das von dem Folienpolymer neben der Oberfläche B verschieden ist, sowie ein Polyamid oder ein Polyfluorolefin in einer wirksamen Menge aufweist, um der Oberfläche selbstgleitende und nichtselbsthaftende Eigenschaften zu verleihen.

2. Folie nach Anspruch 1, worin das Polyamid Nylon 6, Nylon 6,6 oder Nylon 6,10 enthält.

3. Folie nach Anspruch 1, worin das Polyfluorolefin Tetrafluorethylen oder Polyvinylidendifluorid enthält.

4. Folie nach einem der vorhergehenden Ansprüche, worin das organische Polymer 0,1 bis 100% der Oberfläche B ausmacht.

5. Folie nach einem der vorhergehenden Ansprüche, worin das Folienpolymer neben der Oberfläche A ein Polyolefin enthält.

6. Folie nach einem der vorhergehenden Ansprüche, worin das Folienpolymer neben der Oberfläche B ein Polyolefin enthält.

7. Folie nach Anspruch 5 oder 6, worin das Polyolefin ein Polyethylen, Polypropylen oder ein Copolymer aus Ethylen oder Propylen mit sich selbst oder mit einer kleinen Menge mindestens eines anderen monoolefinisch ungesättigten Monomers enthält.

8. Folie nach Anspruch 6, worin das Folienpolymer neben der Oberfläche A ein lineares Polyethylen mit niedriger Dichte (LLDPE) enthält.

9. Folie nach Anspruch 6 oder 7, worin das Folienpolymer neben der Oberfläche B ein LDPE oder LLDPE enthält.

10. Folie nach einem dcer vorhergehenden Ansprüche, die eine Mehrzahl von Schichten eines thermoplastischen Polymers aufweist.

11. Folie nach Anspruch 10, gebildet durch Coextrusion oder Laminierung.